# FASCICULE DE BREVET EUROPEEN

(11) **EP 1 145 789 B1**
(45) Date de publication et mention de la délivrance du brevet: **29.09.2004**
(21) Numéro de dépôt: 01420077.8
(22) Date de dépôt: 30.03.2001
(51) Int. Cl.: B23B 31/20

(54) **Pince de ravitaillement pour machine-outil**
Zufurhspannvorrichtung für eine Werkzeugmaschine
Machine tool feed clamp

(30) Priorité: 10.04.2000 FR 0004790
(43) Date de publication de la demande: 17.10.2001
(73) Titulaire: E.C.S.- Engineering Carbide Systems, 74460 Marnaz (FR)
(72) Inventeur: Marchand, Alain, 74460 Marnaz (FR)
(74) Mandataire: Poncet, Jean-François

(56) Documents cités:
- EP-A- 0 813 923
- DE-A- 2 405 527
- DE-A- 3 600 445
- DE-A- 19 842 734
- DE-B- 1 197 632

## Description

La présente invention concerne les pinces de ravitaillement utilisées dans les machines-outils pour assurer l'avance d'une barre à usiner lors de son introduction dans une pince de serrage.

Dans une machine-outil, la portion de barre à usiner est tenue par une pince de serrage qui la maintient fermement pendant l'usinage par les outils de la machine-outil. L'usinage consiste à enlever de la matière sur un tronçon de barre dont la longueur est égale à celle de la pièce à réaliser.

Entre deux usinages de pièces successives, la pièce qui vient d'être réalisée est éjectée, et on doit avancer la barre pour introduire son extrémité dans la pince de serrage. L'avance de la barre est alors réalisée par une pince de ravitaillement, qui tient suffisamment la barre par frottement pour vaincre toutes les résistances à l'avance de la barre et assurer son introduction dans la pince de serrage. La pince de ravitaillement est montée sur un chariot qui coulisse longitudinalement dans la machine-outil par rapport à la pince de serrage.

Généralement, les pinces de ravitaillement pour machine-outil comprennent un corps de pince tubulaire, ayant un alésage axial de passage d'une barre à introduire dans la machine-outil, et ayant un tronçon aval de corps de pince présentant une capacité de déformation élastique radiale permettant d'être en appui élastique sur la surface extérieure de la barre. La barre est introduite en force dans la pince de ravitaillement, par exemple par un embarreur qui la pousse longitudinalement, et la barre écarte élastiquement les branches de la pince de ravitaillement. La raideur des branches de la pince de ravitaillement doit être choisie de façon à serrer radialement la barre de façon appropriée pour assurer une force de tenue axiale déterminée comprise entre des valeurs minimale et maximale satisfaisantes. Par exemple, on cherche à réaliser une force de tenue axiale de barre comprise entre 400 et 600 Newtons, pour les diamètres de barre les plus courants.

Une pince de ravitaillement ainsi constituée n'est pas réglable. La difficulté est alors que la force de retenue axiale qu'elle assure sur la barre dépend essentiellement du diamètre de la barre. Dans une production en série, les diamètres de barre peuvent présenter de légères différences d'un lot à l'autre, ce qui induit une variation de la force de tenue axiale par la pince de ravitaillement, variation qui peut sortir des limites de tolérance de la force de tenue axiale.

Pour éviter ce problème, on a depuis longtemps proposé des pinces de ravitaillement réglables, telles que celles décrites par exemple dans le document DE 2 405 527 A. Dans ce document, le corps de pince tubulaire comporte en outre une enveloppe extérieure, ayant un tronçon amont fileté de fixation de la pince, ayant une portée conique interne de serrage pouvant venir au contact d'une portée conique externe de serrage correspondante du corps de pince, et ayant un tronçon à filetage intérieur coopérant par vissage avec un filetage extérieur du corps de pince pour serrer radialement le tronçon aval de corps de pince contre la surface extérieure de la barre. L'enveloppe comporte des fentes longitudinales dans lesquelles peuvent s'insérer des ergots dépassant de la face extérieure du corps de pince pour assurer un blocage relatif en rotation de l'enveloppe extérieure par rapport au corps de pince. Un outil spécifique permet de serrer radialement le corps de pince et d'entraîner en rotation le corps de pince dans l'enveloppe extérieure, pour modifier par vissage la position longitudinale relative du corps de pince par rapport à l'enveloppe extérieure et modifier ainsi le serrage de la barre.

Un tel dispositif présente l'inconvénient de nécessiter un outil spécifique pour serrer radialement le corps de pince et autoriser sa rotation pour vissage de réglage afin que les ergots de blocage échappent aux fentes de blocage dans l'enveloppe extérieure. En outre, le réglage est discontinu, les ergots devant nécessairement s'engager dans l'une des fentes longitudinales de l'enveloppe extérieure. Egalement, cette structure est inapplicable aux petits diamètres de pièces à usiner, car la proportion de diamètre occupée par la pince, nécessaire pour assurer la tenue des efforts mécaniques, est alors trop grande pour passer dans les logements correspondants de la machine-outil. Une telle disposition est encore plus inapplicable aux pinces dont la surface d'appui est en carbure, à cause de l'encombrement nécessaire de la partie en carbure.

Dans les pinces de ravitaillement, on a également proposé de réaliser la surface de serrage en carbure, c'est-à-dire en mélange fritté de carbure de tungstène, de cobalt et de nickel, car une telle structure présente un bon coefficient de glissement sur l'acier, et évite le grippage que l'on constate parfois lorsqu'on utilise une pince en acier. Mais de telles pinces connues à surface de serrage en carbure, décrites par exemple dans le document EP 0 813 923 A, ne sont pas réglables en diamètre, et rayent encore certaines barres à cause de la trop grande course élastique de la pince lorsque la barre a un grand diamètre.

Le problème proposé par la présente invention est de proposer une nouvelle structure de pince de ravitaillement réglable, conçue de façon à réduire la production de rayures sur les barres et à augmenter sa durée de vie en limitant les frottements sur la barre.

Un autre objet de l'invention est de concevoir une telle structure de pince de ravitaillement pouvant être réalisée même pour les petits diamètres de barre, présentant une capacité de réglage continu en diamètre, ne nécessitant aucun outil spécifique de réglage, et présentant une grande commodité de réglage sur la machine-outil.

Un autre objet de l'invention est d'améliorer la tenue de la barre, en assurant une tenue rigide et symétrique centrée de la barre face à la pince de serrage, sans possibilité d'évasement ou d'écartement décentré.

Pour atteindre ces objets ainsi que d'autres, une pince de ravitaillement pour machine-outil selon l'invention comprend :
- un corps de pince tubulaire, ayant un alésage axial de passage d'une barre à introduire dans la machine-outil,
- un tronçon amont fileté de fixation de la pince sur un chariot d'avance de la machine-outil,
- un tronçon aval de corps de pince, comportant des fentes longitudinales pour présenter une capacité de déformation radiale élastique permettant d'être en appui sur la surface extérieure de la barre, et comportant une portée conique externe de serrage,
- une enveloppe extérieure, ayant un tronçon aval à portée conique interne de serrage au contact de la portée conique externe de serrage du corps de pince, et ayant un tronçon amont à filetage intérieur coopérant par vissage avec un filetage extérieur du corps de pince pour serrer radialement le tronçon aval de corps de pince ; ces caractéristiques sont connues du document DE 2 405 527 A ;
selon l'invention :
- le tronçon amont fileté de fixation de la pince est solidaire du corps de pince,
- l'enveloppe extérieure présente dans son tronçon aval à portée conique interne de serrage une structure ayant une grande résistance à l'expansion radiale,
- l'enveloppe extérieure comporte des moyens lui conférant une capacité de déformation longitudinale élastique dans sa partie de longueur entre la portée conique interne de serrage et le filetage intérieur.

Le fonctionnement d'une telle pince de ravitaillement selon l'invention diffère du fonctionnement d'une pince réglable connue.

Dans les pinces réglables connues, pour conserver une capacité de déformation élastique radiale de la pince lors de l'introduction de la barre ou lors de son coulissement dans la pince de ravitaillement, la zone de serrage par les portées coniques de serrage est décalée axialement par rapport à la zone d'appui du corps de pince sur la barre. Ainsi, l'élasticité de la pince de ravitaillement est assurée par des éléments en forme de languettes longitudinales qui fléchissent radialement indépendamment les uns des autres. Lors d'un effort radial imprimé par la barre sur la pince de ravitaillement, seule une portion de la périphérie de la pince de ravitaillement assure le maintien centré de la barre. Il en résulte une tenue élastique qui manque de rigidité.

Par contre, avec la structure selon l'invention, la capacité de déformation élastique radiale, qui est nécessaire pour l'introduction de la barre ou son coulissement par rapport à la pince de ravitaillement, est assurée non pas par le tronçon aval de corps de pince à fentes longitudinales, mais par la capacité de déformation longitudinale élastique de l'enveloppe extérieure qui présente par ailleurs une structure ayant une grande résistance à l'expansion radiale. Il en résulte que, lors d'une sollicitation radiale exercée par la barre sur la pince de ravitaillement, c'est toute la raideur de l'enveloppe extérieure qui participe au maintien centré de la barre, et non plus une portion seulement de sa périphérie. De cette façon, la structure de pince de ravitaillement selon l'invention assure un maintien centré beaucoup plus efficace de la barre contre ses oscillations latérales.

Simultanément, on comprend que le réglage d'une telle structure est continu, et ne nécessite aucun outil spécifique tel qu'un outil de serrage pour autoriser la rotation relative du corps de pince dans l'enveloppe extérieure.

De préférence, le corps de pince est en appui radial sur la barre par sa portion longitudinale directement en regard de la portée conique interne de serrage de l'enveloppe extérieure.

Selon une première réalisation, les portées coniques de serrage ont leur sommet orienté vers l'amont.

Selon une réalisation préférée, les portées coniques de serrage ont leur sommet orienté vers l'aval.

Dans un mode de réalisation avantageux, efficace, économique et facile à réaliser, les moyens conférant une capacité de déformation longitudinale élastique comprennent des lumières allongées et orientées obliquement par rapport à l'axe longitudinal de l'enveloppe extérieure, réparties autour de l'axe longitudinal dans la portion d'enveloppe extérieure située entre la portée conique interne de serrage et le filetage intérieur.

De bons résultats ont été obtenus en prévoyant des lumières allongées qui sont inclinées d'un angle compris entre 5° et 12° environ par rapport à l'axe longitudinal. Une inclinaison d'environ 8° paraît avantageuse.

Les lumières allongées peuvent avoir une largeur similaire à celle des longerons obliques qui les bordent. Leur nombre est choisi en fonction des caractéristiques de raideur recherchées. Quatre à six lumières allongées peuvent convenir pour les diamètres de pince les plus courants.

Dans une réalisation commode, les moyens de blocage en rotation de l'enveloppe extérieure par rapport au corps de pince peuvent comprendre un contre-écrou engagé par vissage sur le filetage extérieur du corps de pince.

Selon une réalisation avantageuse, la portée conique externe de serrage du corps de pince est réalisée sur la face d'extrémité aval du corps de pince.

Dans ce cas, la portée conique externe de serrage du corps de pince peut avantageusement être détalonnée par réduction du diamètre au voisinage des extrémités aval des fentes longitudinales.

D'autres objets, caractéristiques et avantages de la présente invention ressortiront de la description suivante de modes de réalisation particuliers, faite en relation avec les figures jointes, parmi lesquelles:
- la figure 1 est une vue de côté d'une pince de ravitaillement pour machine-outil selon un premier mode de réalisation de la présente invention ;
- la figure 2 est une vue de côté en coupe longitudinale de la pince de ravitaillement de la figure 1 ;
- la figure 3 est une vue de la face amont de la pince de ravitaillement de la figure 1 ;
- la figure 4 est une vue de côté agrandie en coupe longitudinale montrant l'insert en carbure dans le mode de réalisation de la figure 2 ;
- la figure 5 est une vue de côté en coupe longitudinale d'une enveloppe extérieure selon le premier mode de réalisation de la présente invention ;
- la figure 6 est une vue de la face amont de l'enveloppe extérieure de la figure 5 ;
- la figure 7 illustre le contre-écrou de blocage en rotation de l'enveloppe extérieure sur le corps de pince de ravitaillement ;
- la figure 8 est une vue de côté en coupe longitudinale montrant la pince de ravitaillement assemblée selon le premier mode de réalisation, avec une barre engagée dans la pince ;
- la figure 9 est une vue de côté d'un corps de pince selon un second mode de réalisation de la présente invention ;
- la figure 10 est une vue de côté en coupe longitudinale du corps de pince de la figure 9 ;
- la figure 11 est une vue de côté en coupe longitudinale d'une enveloppe extérieure selon le second mode de réalisation de la présente invention ;
- la figure 12 est une vue de face amont de l'enveloppe extérieure de la figure 11 ; et
- la figure 13 illustre l'écrou de blocage en rotation de l'enveloppe extérieure sur le corps de pince dans le second mode de réalisation.

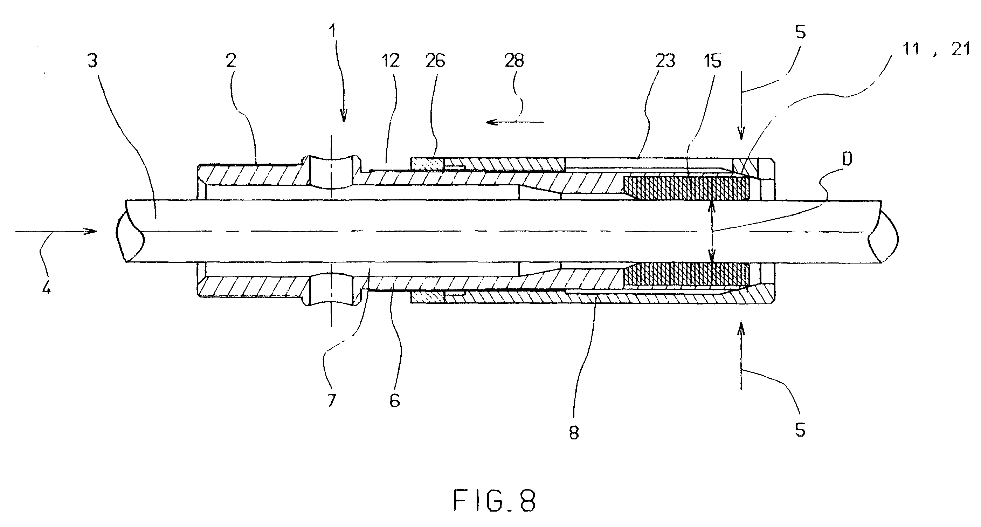

On se référera tout d'abord à la figure 8, illustrant la structure générale de la pince de ravitaillement selon un premier mode de réalisation de l'invention. La pince de ravitaillement 1 comporte un tronçon amont 2 fileté permettant d'assurer la fixation de la pince de ravitaillement 1 sur un chariot d'avance de machine-outil, non représenté. La pince de ravitaillement 1 est conformée pour tenir une barre 3 et pour assurer son avance vers l'aval, comme illustré par la flèche 4, afin d'introduire un tronçon de barre de longueur déterminée dans une pince de serrage de machine-outil non représentée et située vers la droite sur la figure 8. Pour cela, la pince de ravitaillement 1 exerce sur la barre 3 une force de serrage radiale élastique illustrée par les flèches 5.

La pince de ravitaillement 1 comprend un corps de pince 6 tubulaire, ayant un alésage axial 7 de passage de la barre 3 à introduire dans la machine-outil.

La pince de ravitaillement 1 comprend également une enveloppe extérieure 8 tubulaire, conformée pour appliquer sur le corps de pince 6 la force de serrage radiale 5 pour le serrage de la barre 3.

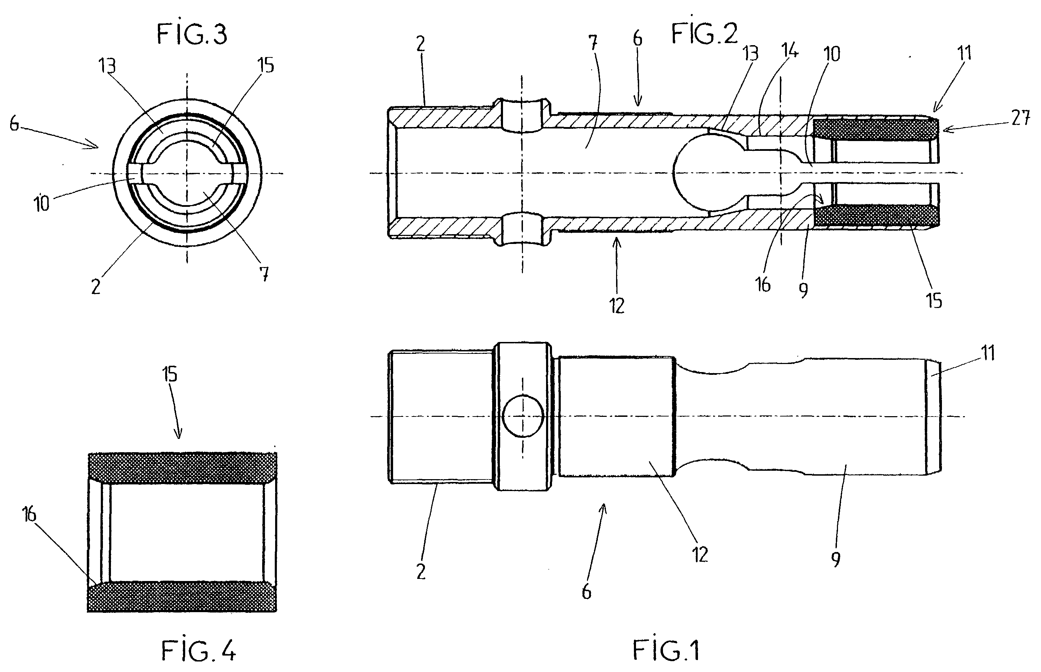

En se référant aux figures 1 et 2 illustrant plus spécifiquement le corps de pince 6, le corps de pince 6 comprend un tronçon aval 9 de corps de pince, comportant des fentes longitudinales telles que la fente 10 pour présenter une capacité de déformation radiale élastique permettant d'être en appui sur la surface extérieure de la barre 3. Le tronçon aval 9 de corps de pince comporte également une portée conique externe de serrage 11. La partie intermédiaire du corps de pince 6 comprend un filetage extérieur 12. On distingue à nouveau, sur le corps de pince 6, le tronçon amont 2 fileté permettant la fixation de la pince de ravitaillement 1 sur un chariot d'avance de machine-outil.

Le tronçon aval 9 du corps de pince 6 comporte, depuis l'amont vers l'aval, un premier rétrécissement conique 13 de guidage de barre, puis un tronçon cylindrique 14. Dans la réalisation illustrée, le corps de pince 6 est en grande partie réalisé en acier, avec un insert 15 tubulaire en matériau dur formant la zone aval de l'alésage axial 7. L'insert 15 comprend une portion conique d'entrée 16, constituant un second rétrécissement de l'alésage axial 7 à angle faible, évitant les chocs de l'extrémité de la barre sur l'insert 15. Cela permet de réaliser un insert en matériau dur mais fragile aux chocs, par exemple en carbure.

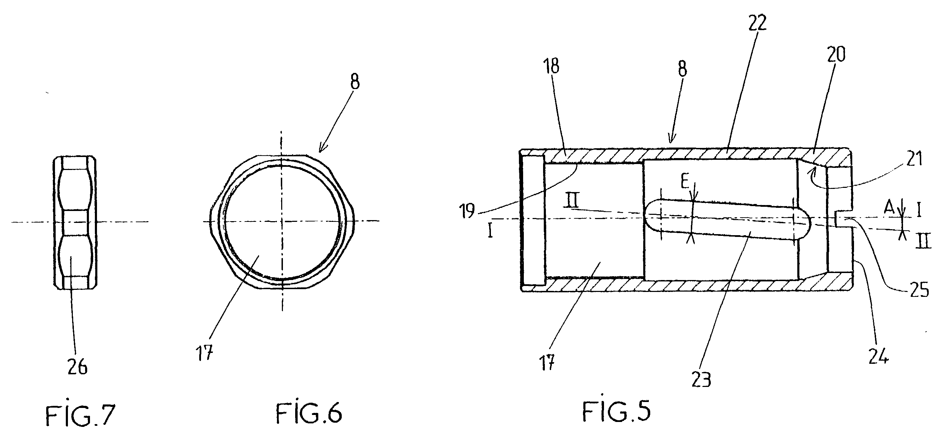

On se réfère maintenant aux figures 5 et 6, illustrant plus spécifiquement l'enveloppe extérieure 8. L'enveloppe extérieure 8, de forme générale tubulaire ayant un alésage central 17 pour le passage du corps de pince 6, comprend un tronçon amont 18 à filetage intérieur 19 pour coopérer par vissage avec le filetage extérieur 12 (figures 1 et 2) du corps de pince 6. L'enveloppe extérieure 8 comprend un tronçon aval 20 de forme annulaire et ayant une portée conique interne de serrage 21 venant au contact de la portée conique externe de serrage 11 du corps de pince 6.

Entre le tronçon amont 18 à filetage intérieur 19 et le tronçon aval 20 à portée conique interne de serrage 21, l'enveloppe extérieure 8 comprend un tronçon intermédiaire 22 qui présente une capacité de déformation longitudinale élastique. Dans le mode de réalisation illustré sur les figures, la capacité de déformation longitudinale élastique est réalisée en prévoyant des lumières allongées telles que la lumière 23, orientées obliquement par rapport à l'axe longitudinal I-I de l'enveloppe extérieure 8, et réparties autour de l'axe longitudinal I-I. Ainsi, sur la figure 5, la lumière 23 allongée présente un axe longitudinal II-II qui fait, avec l'axe longitudinal I-I de l'enveloppe extérieure 8, un angle A pouvant avantageusement être compris entre 5° et 12°.

La figure 5 illustre une seule lumière 23 allongée oblique. On comprendra qu'on réalise plusieurs lumières 23, qui peuvent avantageusement présenter une largeur E similaire à la largeur des longerons obliques qui les bordent.

La portée conique interne de serrage 21 de l'enveloppe extérieure 8, ainsi que la portée conique externe de serrage 11 du corps de pince 6, peuvent toutes deux présenter un angle de cône d'environ 15°. Cette valeur est avantageuse pour présenter un bon effet de serrage, sans risque de coincement.

Dans le mode de réalisation illustré sur la figure 5, l'extrémité aval 24 de l'enveloppe extérieure 8 comprend des moyens de prise pour coopérer avec un outil de serrage. Par exemple, les moyens de prise peuvent être des encoches frontales 25.

En utilisation, on assure le blocage en rotation de l'enveloppe extérieure 8 par rapport au corps de pince 6 en utilisant un contre-écrou 26, engagé par vissage sur le filetage extérieur 12 du corps de pince 6 comme illustré sur la figure 8.

Dans le premier mode de réalisation illustré sur les figures 1 à 7, les portées coniques de serrage 11 et 21 ont leur sommet orienté vers l'aval. Dans ce cas, la portée conique externe de serrage 11 du corps de pince 6 est réalisée sur la face d'extrémité aval 27 du corps de pince 6. Cette portée conique externe du corps de pince 6 est alors avantageusement détalonnée par réduction du diamètre au voisinage des extrémités aval des fentes longitudinales telles que la fente 10.

Le corps de pince 6 et l'enveloppe extérieure 8 peuvent être réalisés en acier à ressort.

De préférence, la partie de serrage du corps de pince 6, ou partie constituée par l'extrémité aval du tronçon aval 9 du corps de pince 6, peut comporter un revêtement intérieur à grande dureté destiné à constituer la surface de serrage en contact avec la barre 3.

Dans le mode de réalisation illustré sur les figures 2 et 4, la surface de serrage est constituée par une partie en matériau dur, formée par l'insert 15. Le matériau dur peut être un mélange fritté de carbure de tungstène, de cobalt et de nickel, par exemple.

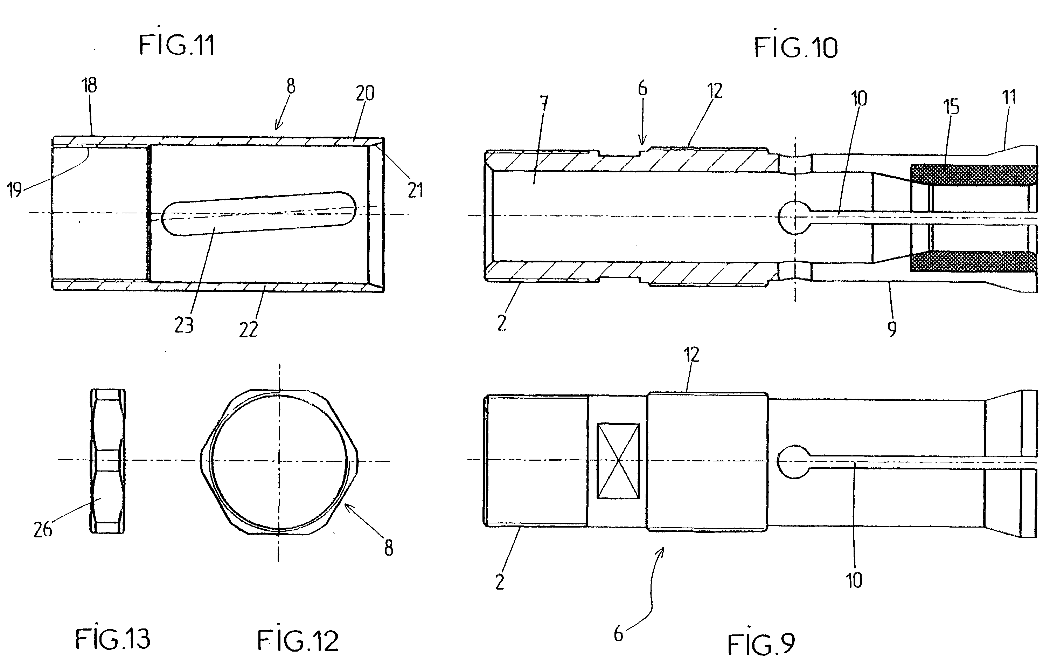

Dans le second mode de réalisation illustré sur les figures 9 à 13, on retrouve les mêmes éléments principaux de la pince de ravitaillement 1, désignés par les mêmes références numériques, à savoir : un corps de pince 6, une enveloppe extérieure 8, un contre-écrou de blocage 26. De façon essentielle, l'enveloppe extérieure 8 comprend des lumières obliques 23 dans son tronçon intermédiaire 22 situé entre un tronçon amont 18 à filetage intérieur et un tronçon aval 20 annulaire à portée conique interne de serrage 21. Le corps de pince 6 comprend un tronçon amont 2 fileté de fixation, un tronçon aval 9 à portée conique externe de serrage 11, des fentes 10 longitudinales, et un tronçon intermédiaire à filetage extérieur 12.

Dans ce second mode de réalisation, les portées coniques de serrage 11 et 21 ont leur sommet orienté vers l'amont.

En se référant à nouveau à la figure 8, lors de l'utilisation, on visse l'enveloppe extérieure 8 sur le corps de pince 6 selon une valeur choisie, déterminant son déplacement axial 28 qui, par appui des portées coniques de serrage 11 et 21 l'une sur l'autre, détermine le diamètre intérieur D de la pince de ravitaillement 1. La position axiale du tronçon amont 18 de l'enveloppe extérieure 8 est alors fixée par le serrage du contre-écrou 26 contre l'extrémité amont de l'enveloppe extérieure 8. La barre 3 est introduite par poussée de l'amont vers l'aval comme indiqué par la flèche 4, et celle-ci repousse radialement la portion de serrage de pince constituée par l'insert 15 du corps de pince 6. Sous l'effort de poussée radiale exercée par la barre 3, le tronçon aval 9 de corps de pince à fentes longitudinales 10 tend à se dilater radialement mais se trouve retenu par le tronçon aval 20 annulaire de l'enveloppe extérieure 8 qui constitue une structure à grande résistance à l'expansion radiale. Par l'effet des portées coniques de serrage 11 et 21, l'effort de poussée radiale dû à la barre est transformé en un effort d'allongement longitudinal appliqué à l'enveloppe extérieure 8. L'enveloppe extérieure 8 s'allonge élastiquement grâce à la capacité de torsion de son tronçon intermédiaire 22. La capacité de déformation élastique par allongement de l'enveloppe extérieure 8 est très faible, mais correspond aux tolérances de diamètre d'un lot de barres 3. L'enveloppe extérieure 8 constitue un ressort à grande raideur, qui assure un maintien satisfaisant de la barre 3.

La présente invention n'est pas limitée aux modes de réalisation qui ont été explicitement décrits, mais elle en inclut les diverses variantes et généralisations contenues dans le domaine des revendications ci-après.

## Revendications

1. Pince de ravitaillement (1) pour machine-outil, comprenant :
- un corps de pince (6) tubulaire, ayant un alésage axial (7) de passage d'une barre (3) à introduire dans la machine-outil,
- un tronçon amont (2) fileté de fixation de la pince sur un chariot d'avance de la machine-outil,
- un tronçon aval (9) de corps de pince, comportant des fentes (10) longitudinales pour présenter une capacité de déformation radiale élastique permettant d'être en appui sur la surface extérieure de la barre (3), et comportant une portée conique externe de serrage (11),
- une enveloppe extérieure (8), ayant un tronçon aval (20) à portée conique interne de serrage (21) au contact de la portée conique externe de serrage (11) du corps de pince (6), et ayant un tronçon amont (18) à filetage intérieur (19) coopérant par vissage avec un filetage extérieur (12) du corps de pince (6) pour serrer radialement le tronçon aval (9) de corps de pince (6),
**caractérisée en ce que** :
- le tronçon amont (2) fileté de fixation de la pince est solidaire du corps de pince (6),
- l'enveloppe extérieure (8) présente dans son tronçon aval (20) à portée conique interne de serrage (21) une structure ayant une grande résistance à l'expansion radiale,
- l'enveloppe extérieure (8) comprend des lumières (23) allongées et orientées obliquement par rapport à l'axe longitudinal (I-I) de l'enveloppe extérieure (8), réparties autour de l'axe longitudinal (I-I) dans la portion d'enveloppe extérieure (8) située entre la portée conique interne de serrage (21) et le filetage intérieur (19), lui conférant une capacité de déformation longitudinale élastique dans sa partie de longueur entre la portée conique interne de serrage (21) et le filetage intérieur (19).

2. Pince de ravitaillement selon la revendication 1, **caractérisée en ce que** le corps de pince (6) est en appui radial sur la barre (3) par sa portion longitudinale directement en regard de la portée conique interne de serrage (21) de l'enveloppe extérieure (8).

3. Pince de ravitaillement selon l'une des revendications 1 ou 2, **caractérisée en ce que** les portées coniques de serrage (11, 21) ont leur sommet orienté vers l'amont.

4. Pince de ravitaillement selon l'une des revendications 1 ou 2, **caractérisée en ce que** les portées coniques de serrage (11, 21) ont leur sommet orienté vers l'aval.

5. Pince de ravitaillement selon l'une quelconque des revendications 1 à 4, **caractérisée en ce que** le tronçon aval (20) de l'enveloppe extérieure (8) est une structure annulaire.

6. Pince de ravitaillement selon l'une quelconque des revendications 1 à 5, **caractérisée en ce que** les lumières (23) allongées sont inclinées d'un angle (A) compris entre 5° et 12° environ par rapport à l'axe longitudinal (I-I).

7. Pince de ravitaillement selon l'une quelconque des revendications 1 à 6, **caractérisée en ce que** les lumières (23) allongées ont une largeur (E) similaire à celle des longerons obliques qui les bordent.

8. Pince de ravitaillement selon l'une quelconque des revendications 1 à 7, **caractérisée en ce que** les portées coniques de serrage (11, 21) présentent un angle de cône d'environ 15°.

9. Pince de ravitaillement selon l'une quelconque des revendications 1 à 8, **caractérisée en ce que** l'extrémité aval (24) de l'enveloppe extérieure (8) comprend des moyens de prise (25) pour coopérer avec un outil de serrage.

10. Pince de ravitaillement selon l'une quelconque des revendications 1 à 9, **caractérisée en ce que** les moyens de blocage en rotation de l'enveloppe extérieure (8) par rapport au corps de pince (6) comprennent un contre-écrou (26) engagé par vissage sur le filetage extérieur (12) du corps de pince (6).

11. Pince de ravitaillement selon l'une quelconque des revendications 1 à 10, **caractérisée en ce que** la portée conique externe de serrage (11) du corps de pince (6) est réalisée sur la face d'extrémité aval (27) du corps de pince (6).

12. Pince de ravitaillement selon la revendication 11, **caractérisée en ce que** la portée conique externe de serrage (11) du corps de pince (6) est détalonnée par réduction du diamètre au voisinage des extrémités aval des fentes (10) longitudinales.

13. Pince de ravitaillement selon l'une quelconque des revendications 1 à 12, **caractérisée en ce que** le corps de pince (6) et l'enveloppe extérieure (8) sont réalisés en acier à ressort.

14. Pince de ravitaillement selon l'une quelconque des revendications 1 à 13, **caractérisée en ce que** la partie de serrage du corps de pince (6) comporte un revêtement intérieur à grande dureté destiné à constituer la surface de serrage en contact avec la barre (3).

15. Pince de ravitaillement selon la revendication 14, **caractérisée en ce que** la surface de serrage est constituée par un insert (15) en matériau dur tel qu'un mélange fritté de carbure de tungstène, de cobalt et de nickel.

## Patentansprüche

1. Vorschubzange (1) für eine Werkzeugmaschine, umfassend :
- einen rohrförmigen Klemmkörper (6) mit einer Axialbohrung (7) für den Durchtritt einer in die Werkzeugmaschine einzuführenden Stange (3),
- einen hinteren Gewindeabschnitt (2) für die Befestigung der Vorschubzange an einem Vorschubschlitten der Werkzeugmaschine,
- einen vorderen Klemmkörper-Abschnitt (9) mit Längsschlitzen (10) für eine elastische Radialverformung, die eine Anlage an der Außenfläche der Stange (3) ermöglicht, und mit einem äußeren, konischen Klemmbereich (11),
- eine Außenhülse (8), die einen vorderen Abschnitt (20) mit einem vorderen, innen konischen Klemmbereich (21), der in Berührung mit dem äußeren, konischen Klemmbereich (11) des Klemmkörpers (6) ist, und einen hinteren Abschnitt (18) mit einem Innengewinde (19) hat, das auf ein Außengewinde (12) des Klemmkörpers (6) aufgeschraubt ist, wodurch der vordere Abschnitt (9) des Klemmkörpers (6) radial eingespannt ist,
**dadurch gekennzeichnet, daß** :
- der hintere Gewindeabschnitt (2) zur Befestigung der Vorschubzange einstückig mit dem Klemmkörper (6) ausgebildet ist,
- die Außenhülse (8) an ihrem vorderen Abschnitt (20) mit dem innen konischen Klemmbereich (21) eine Struktur mit großer Festigkeit gegen radiale Dehnung hat,
- die Außenhülse (8) Langlöcher (23) aufweist, die zur Längsachse (I-I) der Außenhülse (8) schräg ausgerichtet und um die Längsachse (I-I) in dem Abschnitt der Außenhülse (8) verteilt angebracht sind, der sich zwischen dem innen konischen Klemmbereich (21) und dem Innengewinde (19) befindet, wodurch sie dieser eine in Längsrichtung verlaufende, elastische Verformbarkeit in dem Längsabschnitt verleihen, der zwischen dem innen konischen Klemmbereich (21) und dem Innengewinde (19) liegt.

2. Vorschubzange nach Anspruch 1, **dadurch gekennzeichnet, daß** der Klemmkörper (6) mit seinem Längsabschnitt radial an der Stange (3) anliegt, der dem innen konischen Klemmbereich (21) der Außenhülse (8) direkt gegenüberliegt.

3. Vorschubzange nach Anspruch 1 oder 2, **dadurch gekennzeichnet, daß** die Scheitelpunkte der konischen Klemmbereiche (11, 21) nach hinten weisen.

4. Vorschubzange nach Anspruch 1 oder 2, **dadurch gekennzeichnet, daß** die Scheitelpunkte der konischen Klemmbereiche (11, 21) nach vorn weisen.

5. Vorschubzange nach einem der Ansprüche 1 bis 4, **dadurch gekennzeichnet, daß** der vordere Abschnitt (20) der Außenhülse (8) eine Ringform hat.

6. Vorschubzange nach einem der Ansprüche 1 bis 5, **dadurch gekennzeichnet, daß** die Langlöcher (23) mit einem Winkel (A) schräg verlaufend angebracht sind, der bezüglich der Längsachse (I-I) etwa zwischen 5° und 12° liegt.

7. Vorschubzange nach einem der Ansprüche 1 bis 6, **dadurch gekennzeichnet, daß** die Langlöcher (23) eine Breite (E) haben, die etwa der Breite der sie einfassenden schrägen Längsträger entspricht.

8. Vorschubzange nach einem der Ansprüche 1 bis 7, **dadurch gekennzeichnet, daß** die konischen Klemmbereiche (11, 21) einen Kegelwinkel von etwa 15° haben.

9. Vorschubzange nach einem der Ansprüche 1 bis 8, **dadurch gekennzeichnet, daß** der vordere Abschnitt (24) der Außenhülse (8) Angriffsmittel (25) für ein Klemmwerkzeug hat.

10. Vorschubzange nach einem der Ansprüche 1 bis 9, **dadurch gekennzeichnet, daß** die Mittel zur drehfesten Fixierung der Außenhülse (8) am Klemmkörper (6) aus einer Gegenmutter (26) bestehen, die auf das Außengewinde (12) des Klemmkörpers (6) aufgeschraubt ist.

11. Vorschubzange nach einem der Ansprüche 1 bis 10, **dadurch gekennzeichnet, daß** der äußere, konische Klemmbereich (11) des Klemmkörpers (6) an dem vorderen Stirnende (27) des Klemmkörpers (6) ausgebildet ist.

12. Vorschubzange nach Anspruch 11, **dadurch gekennzeichnet, daß** der äußere, konische Klemmbereich (11) des Klemmkörpers (6) als Durchmesserverringerung in der Nähe der vorderen Enden der Längsschlitze (10) durch Hinterdrehung eingearbeitet ist.

13. Vorschubzange nach einem der Ansprüche 1 bis 12, **dadurch gekennzeichnet, daß** der Klemmkörper (6) und die Außenhülse (8) aus Federstahl bestehen.

14. Vorschubzange nach einem der Ansprüche 1 bis 13, **dadurch gekennzeichnet, daß** der Klemmbereich des Klemmkörpers (6) eine innere Auskleidung mit großer Härte hat, die dazu dient, die in Berührung mit der Stange (3) kommende Klemmfläche zu bilden.

15. Vorschubzange nach Anspruch 14, **dadurch gekennzeichnet, daß** die Klemmfläche aus einem Einsatz (15) aus hartem Werkstoff wie z. B. einer Sintermischung aus Wolframkarbid, Kobaltkarbid und Nickelkarbid besteht.

## Claims

1. Machine tool feeder chuck (1), including :
- a tubular chuck body (6), having an axial bore (7) through which a bar (3) to be inserted into the machine tool is passed,
- a screwthreaded upstream section (2) for fixing the chuck to a feeding carriage of the machine tool,
- a chuck body downstream section (9), including longitudinal slots (10) so that it has a capacity for elastic deformation in the radial direction enabling it to bear on the exterior surface of the bar (3), and including an external conical clamping bearing surface (11),
- an exterior envelope (8), having a downstream section (20) with an internal conical clamping bearing surface (21) in contact with the external conical clamping bearing surface (11) of the chuck body (6), and having an upstream section (18) with an interior screwthread (19) meshing with an exterior screwthread (12) of the chuck body (6) to clamp the downstream section (9) of the chuck body (6) in the radial direction,
**characterized in that** :
- the screwthreaded fixing upstream section (2) of the chuck is fastened to the chuck body (6),
- the exterior envelope (8) has a structure having a high resistance to radial expansion in its downstream section (20) with the internal conical clamping bearing surface (21),
- the exterior envelope (8) includes elongate openings (23) oriented obliquely to the longitudinal axis (I-I) of the exterior envelope (8), distributed around the longitudinal axis (I-I) in the portion of the exterior envelope (8) between the internal conical clamping bearing surface (21) and the interior screwthread (19), conferring on it a capacity for elastic deformation in the longitudinal direction in the part of its length between the internal conical clamping bearing surface (21) and the interior screwthread (19).

2. Feeder chuck according to claim 1, **characterized in that** the longitudinal portion of the chuck body (6) directly facing the internal conical clamping bearing surface (21) of the exterior envelope (8) bears radially on the bar (3).

3. Feeder chuck according to claim 1 or claim 2, **characterized in that** the clamping conical bearing surfaces (11, 21) have their apex oriented in the upstream direction.

4. Feeder chuck according to claim 1 or claim 2, **characterized in that** the clamping conical bearing surfaces (11, 21) have their apex oriented in the downstream direction.

5. Feeder chuck according to any one of claims 1 to 4, **characterized in that** the downstream section (20) of the exterior envelope (8) is an annular structure.

6. Feeder chuck according to any one of claims 1 to 5, **characterized in that** the elongate openings (23) are inclined to the longitudinal axis (I-I) at an angle (A) in the range from approximately 5° to approximately 12°.

7. Feeder chuck according to any one of claims 1 to 6, **characterized in that** the elongate openings (23) have a width (E) similar to that of oblique longitudinal members that flank them.

8. Feeder chuck according to any one of claims 1 to 7, **characterized in that** the clamping conical bearing surfaces (11, 21) have a cone angle of approximately 15°.

9. Feeder chuck according to any one of claims 1 to 8, **characterized in that** the downstream end (24) of the exterior envelope (8) includes gripping means (25) for cooperating with a clamping tool.

10. Feeder chuck according to any one of claims 1 to 9, **characterized in that** the means for preventing the exterior envelope (8) from rotating relative to the chuck body (6) include a lock-nut (26) screwed onto the exterior screwthread (12) of the chuck body (6).

11. Feeder chuck according to any one of claims 1 to 10, **characterized in that** the external conical clamping bearing surface (11) of the chuck body (6) is formed on the downstream end face (27) of the chuck body (6).

12. Feeder chuck according to claim 11, **characterized in that** the external conical clamping bearing surface (11) of the chuck body (6) is relieved by reducing the diameter in the vicinity of the downstream ends of the longitudinal slots (10).

13. Feeder chuck according to any one of claims 1 to 12, **characterized in that** the chuck body (6) and the exterior envelope (8) are made of spring steel.

14. Feeder chuck according to any one of claims 1 to 13, **characterized in that** the clamping part of the chuck body (6) has a hard interior coating constituting the clamping surface in contact with the bar (3).

15. Feeder chuck according to claim 14, **characterized in that** the clamping surface is constituted by an insert (15) made of a hard material such as a sintered mixture of tungsten carbide, cobalt and nickel.
